# EUROPEAN PATENT APPLICATION

(11) **EP 2 540 470 A2**
(43) Date of publication of application: **02.01.2013**
(21) Application number: 11747637.4
(22) Date of filing: 23.02.2011
(51) Int. Cl.: B29C 33/42, A47C 27/08

(54) **AIR MATTRESS, AIR MATTRESS MANUFACTURING DEVICE AND METHOD**

(30) Priority: 24.02.2010 KR 20100016458; 24.02.2010 KR 20100016457
(71) Applicant: Ceragem Cellupedic. Co., Ltd, Pyeongtaek-si, Gyeonggi-do 459-040 (KR)
(72) Inventor: PARK, Seong-Chan, Cheongju-si Chungcheongbuk-do 361-775 (KR); CHOI, Jin-Young, Seoul 135-230 (KR); KIM, Dong-Jin, Cheongju-si Chungcheongbuk-do 361-260 (KR)
(74) Representative: Hössle Patentanwälte Partnerschaft
(86) International application number: PCT/KR2011/001184
(87) International publication number: WO 2011/105747

(57) **Abstract**

Disclosed are an air mattress and an air mattress manufacturing device and method, which can reduce manufacturing costs, enhance the rigidity of the bottom plate, and shorten and automate the manufacturing process. The air mattress of the present invention comprises: a cushion portion, which has multiple air sacs, and which is formed from a first resin composition made from a mixture of a synthetic resin and a plasticizer, so as to have elasticity and flexibility; and a bottom plate, which is coupled with the cushion portion, and which is formed from a second resin composition made from a mixture of a synthetic resin, a plasticizer having less than or equal to 50% of the plasticizer mixed into the first resin composition, and a rigid material for enhancing the rigidity of the air mattress, and thus the manufacturing costs and the rigidity thereof can be enhanced. In addition, the present invention provides a manufacturing method for an air mattress manufacturing device comprises: a lower mold provided with multiple air sac molding grooves, recessed to a certain depth, to form air sacs in the cushion portion of the air mattress; and an upper mold that covers the opening of the lower mold, wherein a thickness reduction portion, which reduces the thickness of the mold for a cutting groove formation portion to less than the thickness of an air sac formation portion, is formed on the cutting groove formation portion, to allow the speed of thermal conduction of the air sac mold formation portion to be faster than that of the air sac mold formation portion, and thus an air mattress having a uniform thickness can be manufactured without requiring the use of a separate communication member.

## Description

### Technical Field

The present invention relates to an air mattress, and a device and method for manufacturing the same, and, more particularly, to a device and method for manufacturing an air mattress, in which the manufacturing cost of a bottom plate may be reduced and strength thereof may be enhanced, and also, a communication path formation portion of a lower mold includes a thickness reduction portion so that heat conduction of the communication path formation portion is faster than that of a portion for forming air sacs, and in which uniform thickness of the portion for forming the air sacs of the cushion portion and uniform thickness of the communication path formation portion are achieved.

### Background Art

Typically, an air mattress is used to take a rest thereon by injecting air into the air mattress so that the appropriate amount of cushioning is ensured because of the air pressure formed therein. Air mattresses are widely utilized because they are easy to carry and may be provided without particular limitation at any location.

Such a typical air mattress includes a cushion portion having a plurality of air sacs, and a bottom plate attached to the lower surface of the cushion portion. Also, an air inlet for injecting air into respective air sacs is provided on one side of the cushion portion or the bottom plate. Also, respective air sacs are configured such that they communicate with each other by means of a communication path so that air injected via the air inlet is supplied to respective air sacs by traveling along the communication path.

Such a conventional air mattress has been manufactured using slush molding as follows.

In detail, a plastic resin is charged into a mold and then preheated, after which the charged resin is removed from the mold when the inner surface of the mold is appropriately coated with a part of the resin, followed by completely gelling the resin layer which was applied to a predetermined thickness and then performing cooling, so that a cushion portion is formed first.

Subsequently, a communication path is formed so that respective air sacs of the cushion portion communicate with each other, after which a bottom plate which was previously manufactured is attached to the cushion portion, thereby completing the air mattress.

However, conventional methods of manufacturing the air mattress using slush molding are problematic because the molding process that is used to mold the cushion portion is performed with the top of the mold in a state of being opened due to special features of the slush molding, and thus the bottom plate may be attached to the cushion portion only after the cushion portion has finished being molded.

Hence, the air mattress is finally completed by additionally carrying out attaching the cushion portion and the bottom plate to each other. In particular, attaching the cushion portion and the bottom plate to each other is mainly performed using a high-frequency junction process or a bonding process. However, a high-frequency junction requires an additional high-frequency junction machine and a long junction time, undesirably prolonging the manufacturing process, resulting in expensive products.

Also, bonding requires a long processing time as does the above high-frequency junction, and is mostly performed manually, making it difficult to firmly attach the cushion portion and the bottom plate to each other, undesirably resulting in the junction being poor. Furthermore, although a communication path has to be formed between the neighboring air sacs of the cushion portion so that air is efficiently supplied into respective air sacs, slush molding can only form very simple shapes due to special features thereof and thus the communication path of the cushion portion should be formed using an additional communication path forming process after completion of the molding of the cushion portion. Hence, there occur problems of the total process being lengthened and the price of a product being increased.

Also, slush molding is problematic due to special features thereof because, after removal of plastic sol, the remainder thereof may be irregularly left behind on the surface of respective air sacs in the mold, and thus the thickness of the air sacs becomes non-uniform because of this portion that remains behind. Accordingly there frequently occur incidents in which the air mattress partially breaks or splits during use.

To solve such problems, a rotational molding process has been developed and used.

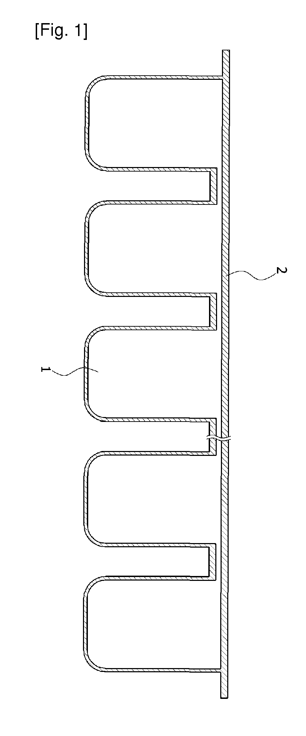

The rotational molding process, as illustrated in FIG. 1, is performed in such a manner that a resin composition is first placed in a mold, a cover is applied on the mold, and the mold is rotated at a predetermined rate, so that the resin composition in the mold is uniformly distributed along the inner surface of the mold due to the centrifugal force generated by the rotation, thus forming a cushion portion 1, and simultaneously the resin is transferred to the cover, thereby manufacturing an air mattress having a bottom plate 2 and a cushion portion 1 that are integrated with each other.

The resin composition of the cushion portion 1 and the bottom plate 2 of the conventional air mattress includes a synthetic resin, such as polyvinyl chloride or synthetic rubber and polyurethane, in powder form and a large amount of plasticizer which increases the thermoplasticity of the synthetic resin so that molding can be efficiently performed at high temperature and in order to impart sufficient elasticity and flexibility to the cushion portion 1.

A main example of the plasticizer includes a phthalate, such as DINP (diisonony1 phthalate), DNOP (di-n-octy1 phthalate), and DIPI (diisodecy1 phthalate).

In order to enable efficient molding of the cushion portion 1 at high temperature and to impart sufficient elasticity and flexibility after molding, the plasticizer is added in an amount of about 80 ∼ 120 Phr. As such, "Phr" is an abbreviation of "per hundred resin or parts per hundreds of rubber" and denotes the weight (e.g. kg) of an additive per 100 weight (e.g. kg) of a polymer. The case where 1 kg of an additive is added to 100 kg of a polymer is referred to as 1 phr.

However, when the expensive plasticizer is added in a large amount as above, the manufacturing cost may be undesirably increased, and also, because of special features of the rotational molding process, the bottom plate should have a thickness necessary for sufficiently maintaining the rigidity of the bottom plate 2 which is made of the same material as the cushion portion 1, and thus the amount of the resin composition that is added may be increased, undesirably increasing the manufacturing cost. In addition, even when the bottom plate 2 and the cushion portion 1 are separately manufactured and attached to each other, the same material is used to enhance the force of attachment between the bottom plate 2 and the cushion portion 1, undesirably increasing the manufacturing cost.

Moreover, in order to achieve mass production using automation, a device and method for manufacturing an air mattress are required that do not use an additional communication member in the mold when conducting the rotational molding process.

### Disclosure

### Technical Problem

Accordingly, the present invention has been made keeping in mind the above problems occurring in the related art, and an object of the present invention is to provide an air mattress and a method of manufacturing the same, in which a cushion portion and a bottom plate are formed using materials that are different from each other, so that the manufacturing cost may be reduced and a force of coupling between the bottom plate and the cushion portion may be enhanced.

Another object of the present invention is to provide an air mattress and a method of manufacturing the same, in which the material of a bottom plate may be improved to increase the rigidity thereof, thus reducing its thickness.

Still another of the present invention is to provide an air mattress and a device and method for manufacturing the same, in which the structure of a lower mold is improved, thus shortening the air mattress manufacturing process and enabling automation.

Yet another of the present invention is to provide an air mattress and a device and method for manufacturing the same, in which the thickness of a portion for forming air sacs of a cushion portion of the air mattress and the thickness of a communication path formation portion are made uniform.

### Technical Solution

In order to accomplish the above object(s), the present invention provides an air mattress, comprising a cushion portion made of a first resin composition comprising a mixture of a synthetic resin and a plasticizer which imparts elasticity and flexibility, the cushion portion including a plurality of air sacs; and a bottom plate made of a second resin composition comprising a mixture of a synthetic resin, a plasticizer in an amount of not more than 75% of an amount of the plasticizer mixed in the first resin composition, and a rigid material which increases rigidity, the bottom plate being coupled with the cushion portion.

Also, more preferably, the bottom plate is formed using the resin composition in which the plasticizer is mixed in an amount of 20 ∼ 70 Phr.

Also, more preferably, the rigid material comprises talc, silica, talc, calcium carbonate, mica, quartz, glass fiber, antimony oxide (Sb₂O₃) and barium titanate.

Also, more preferably, the bottom plate has a thickness of about 1.2 ∼ 2 mm.

In addition, the present invention provides a method of manufacturing the air mattress, comprising manufacturing the bottom plate using the second resin composition; injecting the first resin composition into a lower mold having air sac molding grooves formed at a predetermined interval, which are recessed to a predetermined depth, so as to mold the cushion portion; covering the opening of the lower mold with the bottom plate; placing an upper mold on the bottom plate and fixing the upper mold to the lower mold; and rotating the upper mold and the lower mold using a rotational molding machine, so that the first resin composition is applied along the inner surface of the air sac molding grooves and simultaneously is integrated with the bottom plate.

Also, more preferably, upon injecting the first resin composition, communication members which have a tubular shape to enable respective air sacs to communicate with each other are first provided in the cutting grooves which connect the air sac molding grooves of the lower mold.

In addition, the present invention provides a device for manufacturing an air mattress, comprising a lower mold comprising a plurality of air sac molding grooves recessed to a predetermined depth to form air sacs of a cushion portion of the air mattress and cutting grooves which connect respective air sac molding grooves to form a communication path which connects the cushion portion of the air mattress, and an upper mold which covers the opening of the lower mold, wherein a portion for forming the cutting grooves has a thickness reduction portion which reduces a thickness of a mold for the portion for forming the cutting grooves to make said thickness smaller than a thickness of a mold for a portion for forming the air sac molding grooves, so that a rate of heat conduction of the portion for forming the cutting grooves is equal to or greater than a rate of heat conduction of the portion for forming the air sac molding grooves.

Also, more preferably, the thickness reduction portion is configured such that the thickness of the mold for the portion for forming the cutting grooves is less than the thickness of the mold for the portion for forming the air sac molding grooves.

Also, more preferably, the thickness reduction portion is configured such that a plurality of heat transfer grooves recessed to a predetermined depth is formed on the outer surface of the portion for forming the cutting grooves.

Also, more preferably, the lower mold is configured such that a round portion is formed at a position where the portion for forming the air sac molding grooves and the portion for forming the cutting grooves are adjacent to each other.

The present invention provides a method of manufacturing an air mattress, comprising injecting a resin composition into a lower mold; covering the opening of the lower mold with a bottom plate; placing an upper mold on the bottom plate to couple the upper mold with the lower mold; and rotating the upper mold and the lower mold using a rotational molding machine, so that the resin composition is applied on an inner surface of the air sac molding grooves and an inner surface of the portion for forming the cutting grooves and is simultaneously integrated with the bottom plate.

### Advantageous Effects

In an air mattress according to the present invention, components of a first resin composition of a cushion portion are different from those of a second resin composition of a bottom plate, and thereby the use of a plasticizer is decreased, thus reducing the manufacturing cost.

Also, the second resin composition contains a rigid material to enhance strength, so that the thickness of the bottom plate is decreased, thereby facilitating assembly thereof and reducing the manufacturing cost.

Also, rotational molding enables the coating thickness of the portion for forming air sacs of the cushion portion and the coating thickness of a communication path formation portion to be made uniform, thereby shortening the manufacturing process and enabling automation compared to conventional manufacturing methods which require a communication member.

Also, the thickness of the portion for forming the air sacs of the cushion portion of the air mattress and the thickness of the communication path formation portion are made uniform, thus increasing product reliability.

### Description of Drawings

FIG. 1 is a cross-sectional view illustrating a conventional air mattress;
FIG. 2 is a cross-sectional view illustrating an air mattress according to a first embodiment of the present invention;
FIGS. 3 to 7 are cross-sectional views illustrating a process of manufacturing the air mattress of FIG. 2:

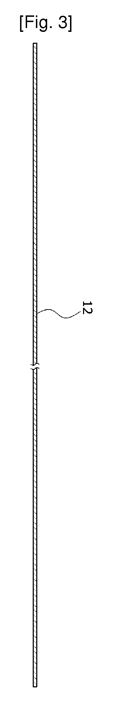

   FIG. 3 is a cross-sectional view illustrating the formation of a bottom plate;

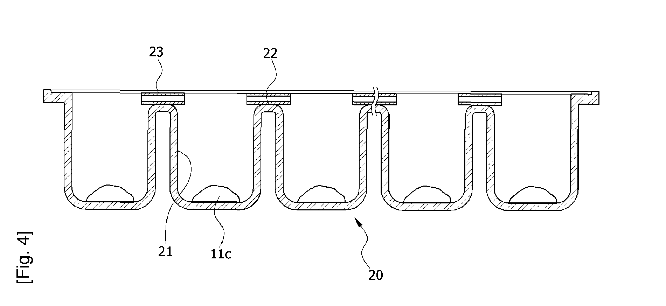

   FIG. 4 is a cross-sectional view illustrating injection;

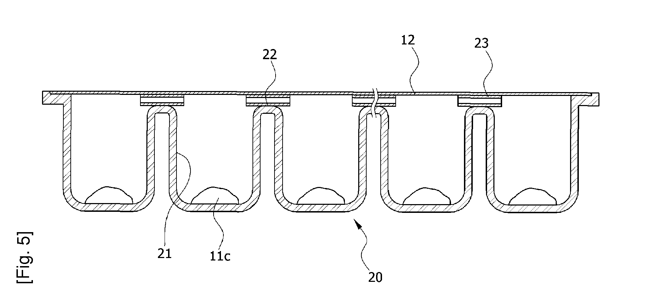

   FIG. 5 is a cross-sectional view illustrating the coupling of the bottom plate;

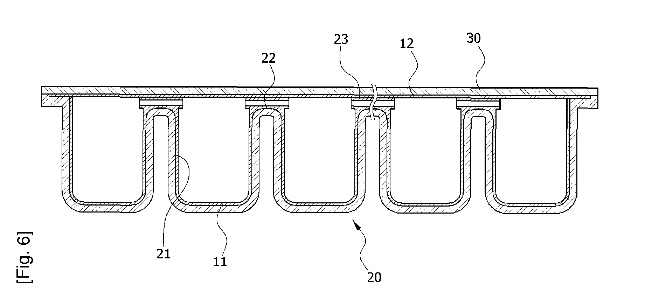

   FIG. 6 is a cross-sectional view illustrating the coupling of an upper mold and rotational molding;

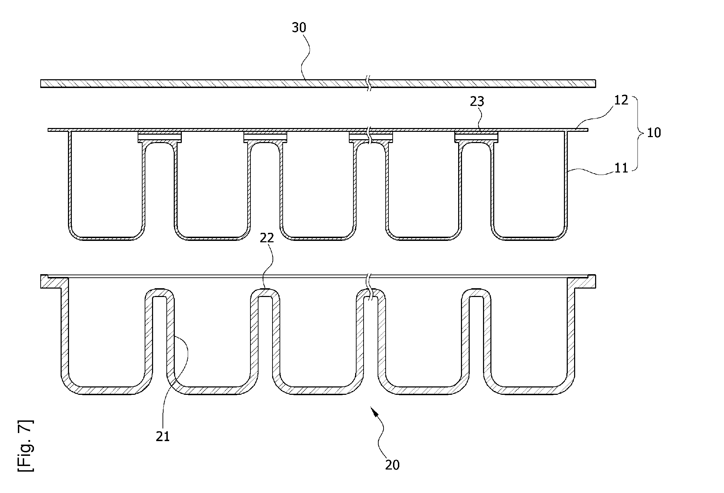

   FIG. 7 is a cross-sectional view illustrating the removal of the molds;

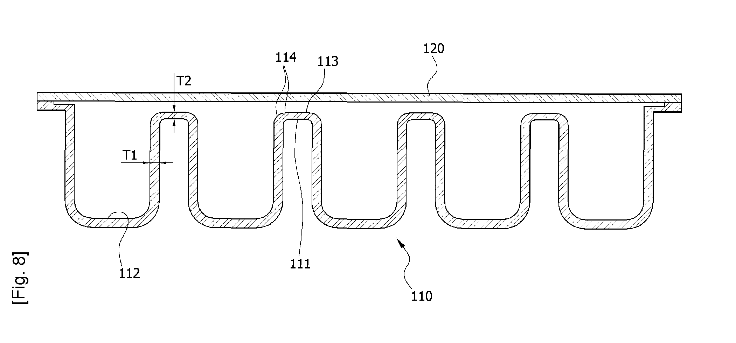

FIG. 8 is a cross-sectional view illustrating a device for manufacturing an air mattress according to a second embodiment of the present invention;

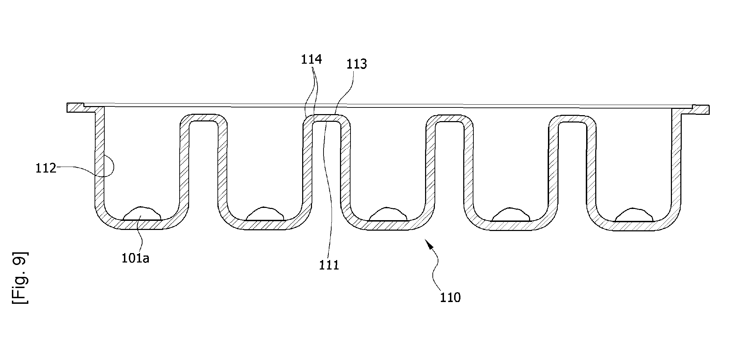

FIGS. 9 to 14 are cross-sectional views sequentially illustrating a process of manufacturing the air mattress according to the second embodiment of the present invention:
FIG. 9 is a cross-sectional view illustrating the injection;

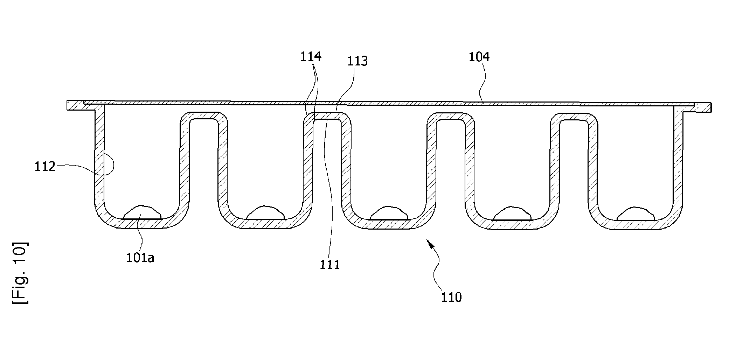

FIG. 10 is a cross-sectional view illustrating the coupling of a bottom plate;

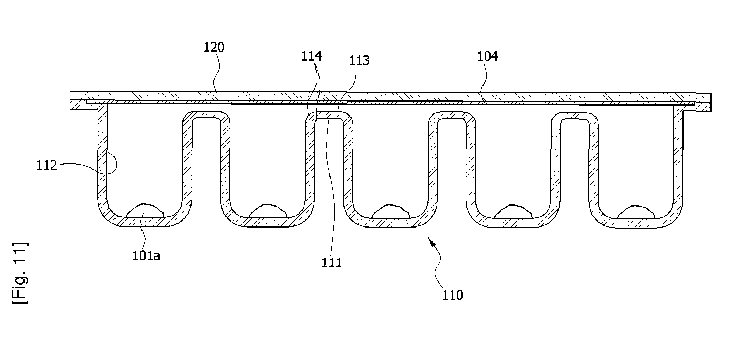

FIG. 11 is a cross-sectional view illustrating the coupling of an upper mold;

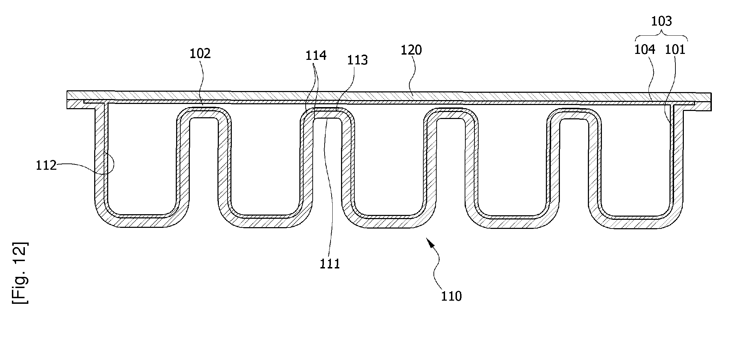

FIG. 12 is a cross-sectional view illustrating the rotational molding;

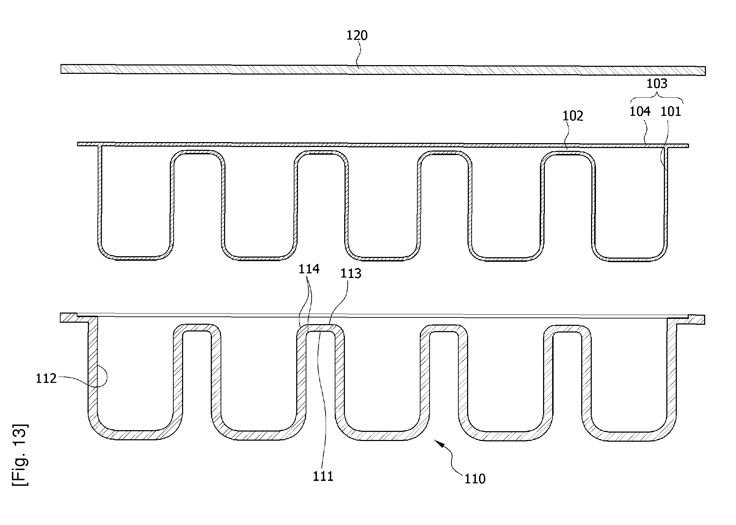

FIG. 13 is a cross-sectional view illustrating the removal of the molds; and

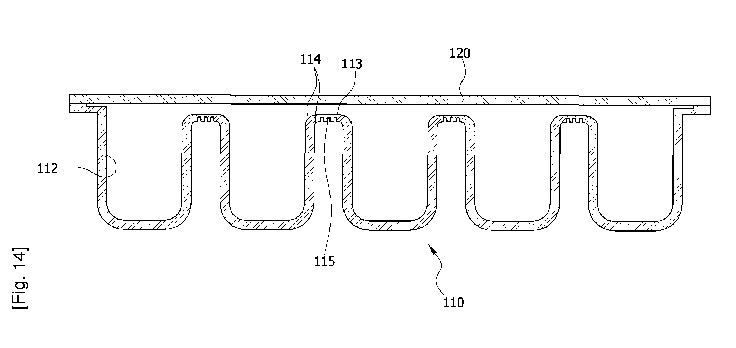

FIG. 14 is a cross-sectional view illustrating a device for manufacturing an air mattress according to a third embodiment of the present invention;

### Best Mode

Hereinafter, an air mattress and a method of manufacturing the same according to preferred embodiments of the present invention will be more fully described with reference to the appended drawings.

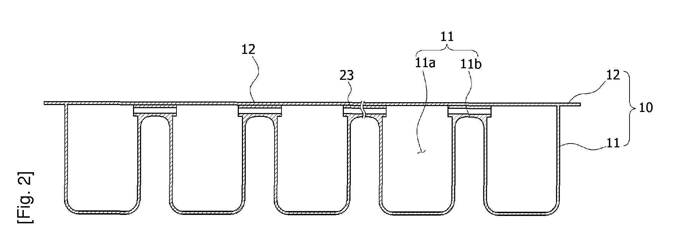

FIG. 2 is a cross-sectional view illustrating an air mattress according to a preferred embodiment of the present invention, and FIGS. 3 to 7 are cross-sectional views illustrating a process of manufacturing the air mattress, in which FIG. 3 is a cross-sectional view illustrating the formation of a bottom plate, FIG. 4 is a cross-sectional view illustrating the injection, FIG. 5 is a cross-sectional view illustrating the coupling of the bottom plate, FIG. 6 is a cross-sectional view illustrating the coupling of an upper mold and rotational molding, and FIG. 7 is a cross-sectional view illustrating the removal of the molds.

As illustrated in the drawings, the air mattress according to the present invention is manufactured in such a manner that a cushion portion 11 having a plurality of air sacs is coupled with a bottom plate 12 which is manufactured separately, using a rotational molding process.

The cushion portion 11 includes a plurality of air sacs 11a, and a communication path 11b which enables respective air sacs 11a to communicate with each other. Although not shown, an air inlet that communicates with the outside is formed on the air sac 11a provided at one end thereof. The cushion portion 11 is formed of a first resin composition comprising a synthetic resin and a plasticizer that imparts elasticity and flexibility. The amount of the plasticizer of the first composition is typically set to about 80 ∼ 120 Phr.

The bottom plate 12 is provided in the form of a flat panel which covers the opening of the cushion portion 11. The bottom plate 12 is formed of a second composition comprising a mixture of a synthetic resin, a plasticizer and a rigid material. The plasticizer of the second composition is mixed in an amount of not more than 75% of the amount of the plasticizer of the first composition. The second composition preferably contains about 20 ∼ 70 Phr of the plasticizer. The rigid material, which is used to enhance the strength of the bottom plate 12, includes talc, silica, calcium carbonate, mica, quartz, glass fiber, antimony oxide (Sb₂O₃) and barium titanate or stone powder, which are inexpensive and have high strength. Because the bottom plate 12 contains a rigid material and thus has high strength, the thickness thereof may be decreased to be 1.2 ∼ 2 mm.

The above process of manufacturing the air mattress will now be described.

As illustrated in FIG. 3, a bottom plate 12 is formed using a second resin composition. A plasticizer of the second resin composition is mixed in an amount of not more than about 70% of the amount of the plasticizer of a first resin composition, thus manufacturing the bottom plate 12 in which elasticity and flexibility are reduced but strength is enhanced due to the use of the rigid material. Also, as the strength of the bottom plate 12 is enhanced, the thickness thereof may be decreased to be about 1.2 ∼ 2.0 mm. If the amount of the rigid material is increased to enhance strength, the thickness of the bottom plate may be decreased to less than 1.2 mm. However, as illustrated as above, it is preferred that the bottom plate have a thickness of about 1.5 mm.

After formation of the bottom plate 12, as illustrated in FIG. 4, a first resin composition 11c is injected into a lower mold 20 having air sac molding grooves 21 which are recessed to a predetermined depth so as to mold the cushion portion 11 and cutting grooves 22 which connect the air sac molding grooves 21. In this case, before the injecting process is performed, communication members 23 having a tubular shape to enable respective air sacs 11a to communicate with each other are provided in the cutting grooves 22.

After injection of the first resin composition 11c, the opening of the lower mold 20 is covered with the bottom plate 12. After putting the bottom plate in place, an upper mold 30 is placed on the bottom plate 12, and the upper mold 30 and the lower mold 20 are coupled and fixed.

After fixing of the upper mold 30 and the lower mold 20, rotational molding is carried out while rotating the upper and lower molds 30, 20 using a rotational molding machine. As the rotational molding is performed, while rotating the upper mold 30 and the lower mold 20, the first resin composition 11c injected into the air sac molding grooves 21 is applied along the inner surface of the air sac molding grooves 21, and is simultaneously integrated with the bottom plate 12.

After completion of the rotational molding, cooling is performed, and as illustrated in FIG. 7, the upper mold 30 and the lower mold 20 are separated from each other and the molded air mattress 10 is detached therefrom, thus completing the manufacturing process.

The air mattress according to the present invention is advantageous because the amount of the plasticizer which is expensive is decreased to about 30 ∼ 50 Phr and a rigid material is added thus reducing the manufacturing cost. Examples of the rigid material may include calcium carbonate, CaCO₃ and stone powder, which are inexpensive and have high strength.

As the bottom plate 12 has enhanced strength, the thickness thereof may be decreased to be as small as about 1.2 mm, thereby reducing the manufacturing cost and actively carrying out heat conduction, resulting in a greater force of coupling between the bottom plate 12 and the cushion portion 11.

Below, an air mattress according to second and third embodiments of the present invention and a manufacturing method thereof are described in detail with reference to the appended drawings. The configuration of the first embodiment, in which components of the first resin composition of the cushion portion are different from those of the second resin composition of the bottom plate, can be applied to the second embodiment of the present invention thus reducing the use of a plasticizer to thereby reduce the manufacturing cost.

FIG. 8 is a cross-sectional view illustrating a device for manufacturing the air mattress according to the second embodiment of the present invention, and FIGS. 9 and 14 are cross-sectional views sequentially illustrating a process of manufacturing the air mattress according to the second embodiment of the present invention. Specifically, FIG. 9 is a cross-sectional view illustrating injection, FIG. 10 is a cross-sectional view illustrating coupling a bottom plate, FIG. 11 is a cross-sectional view illustrating coupling an upper mold, FIG. 12 is a cross-sectional view illustrating rotational molding, FIG. 13 is a cross-sectional view illustrating removing the molds. Also, FIG. 14 is a cross-sectional view illustrating a device for manufacturing the air mattress according to the third embodiment of the present invention.

As illustrated in the drawings, the coupled air mattress manufacturing device according to the present invention is configured such that a lower mold 110 and an upper mold 120 are coupled with each other so as to manufacture an air mattress using rotational molding.

The upper mold 120 is provided in the form of a flat panel so as to cover the opening of the lower mold 110 and is integratedly fixed to the lower mold 110 by means of an additional fixing member.

The lower mold 110 includes a plurality of air sac molding grooves 112 which are recessed to a predetermined depth so as to mold a cushion portion 101 having air sacs and cutting grooves 113 which connect the air sac molding grooves 112 to each other. A portion for forming the cutting grooves 113 includes a thickness reduction portion. The thickness reduction portion is defined by an outer surface 111 of the cutting grooves which is depressed so that a thickness (T2) of a mold for the portion that forms the cutting grooves 113 is thinner than the thickness of a mold for the air sac molding grooves 112. Also, round portions 114 are formed at positions where the portion for forming the air sac molding grooves 112 and the portion for forming the cutting grooves 113 are adjacent to each other. Specifically, the round portions 114 are provided at positions in which the inner surface of the air sac molding grooves 112 and the inner surface of the cutting grooves 113 come into contact with each other and at positions in which the outer surface of the air sac molding grooves 112 and the outer surface 111 of the cutting grooves come into contact with each other. The round portions 114 have a round shape of 10 mm or less, and preferably 2 mm. The molded air mattress 103 has the round portions of 12 mm or less, and preferably 3 ∼ 5 mm.

The lower mold 110 configured as above has the following heat conduction characteristics due to the structural features thereof: a smaller amount of heat is transferred to the mold for the portion that forms the cutting grooves 113, which comes into indirect contact with external heat, compared to the mold for the portion that forms the air sac molding grooves 112, which comes into direct contact with external heat, but the mold for the portion that forms the cutting grooves 113 is formed so that the thickness (T2) thereof is thinner than the thickness (T1) of the mold for the portion that forms the air sac molding grooves 112, whereby heat may be uniformly and more rapidly transferred and thus the coating thickness of the injected resin composition is made uniform. That is, the portion for forming the cutting grooves 113 has a smaller area providing heat contact but has faster heat conduction, compared to the portion for forming the air sac molding grooves 112, so that the rate of coating of the portion for forming the cutting grooves 113 with the resin composition may be equal to or faster than the rate of coating of the air sac molding grooves 112 with the resin composition.

A description of the method of manufacturing the air mattress using the air mattress manufacturing device configured as above is as follows.

As illustrated in FIG. 8, a resin composition 101a is injected into air sac molding grooves 112 of a lower mold 110, after which the opening of the lower mold 110 is covered with a bottom plate 104 as illustrated in FIG. 9.

Thereafter, as illustrated in FIG. 10, an upper mold 120 is placed on the bottom plate 104 and is coupled with the lower mold 110 and fixed thereto.

After the coupling of the upper mold 120 and the lower mold 110, as illustrated in FIG. 11, while the upper and lower molds 120, 110 are being rotated using a rotational molding machine, rotational molding is initiated. As the rotational molding is taking place, while the upper mold 120 and the lower mold 110 are being rotated, the injected resin composition 101a is applied along the inner surface of the air sac molding grooves 112 and the inner surface of the cutting grooves 113 and is simultaneously integrated with the bottom plate 104. As such, the resin composition 101a may be easily applied in an even manner on the inner surface of the cutting grooves 113 along the round portions 114, and the amount or rate of heat transferred to the inner surface of the cutting grooves 113 is equal to or greater than that of heat transferred to the inner surface of the air sac molding grooves 112, and thus, the thickness of the resin composition 101a applied on the cutting grooves 113 may be equal to or greater than the thickness of the resin composition 101a applied on the air sac molding grooves 112, so as to form the communication path 102.

After completion of rotational molding, cooling is performed and then as illustrated in FIG. 12, the upper mold 120 and the lower mold 110 are separated from each other, and the molded air mattress 103 having the communication path 102 that communicates the cushion portion 101 is detached to complete the manufacturing process.

Likewise, as illustrated in FIG. 13, a device for manufacturing an air mattress according to another embodiment of the invention is configured such that a thickness reduction portion has a plurality of heat transfer grooves 115 which are recessed to a predetermined depth on the outer surface of a portion for forming cutting grooves 113, thus rapidly transferring heat.

In the device and method for manufacturing the air mattress according to the present invention, the resin composition 101a may be easily applied on the inner surface of the cutting grooves 113 along the round portions 114, and the thickness (T2) of the mold for the portion that forms the cutting grooves 113 is less than the thickness (T1) of the mold for the portion that forms the air sac molding grooves 112, or the plurality of heat transfer grooves 115 is formed on the outer surface of the portion for forming the cutting grooves 113, so that the amount or rate of heat transferred to the inner surface of the cutting grooves 113 is equal to or greater than that of heat transferred to the inner surface of the air sac molding grooves 112. Thereby, the thickness of the resin composition 101a applied on the cutting grooves 113 may be equal to or slightly greater than the thickness of the resin composition 101a applied on the air sac molding grooves 112. The device and method for manufacturing the air mattress according to the present invention enable the air mattress 103 having the communication path 102 which communicates the cushion portion 101 to be molded so as to have a uniform thickness, even without the use of a conventional communication member.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An air mattress, comprising:
a cushion portion made of a first resin composition comprising a mixture of a synthetic resin and a plasticizer which imparts elasticity and flexibility, the cushion portion including a plurality of air sacs; and
a bottom plate made of a second resin composition comprising a mixture of a synthetic resin, a plasticizer in an amount of not more than 75% of an amount of the plasticizer mixed in the first resin composition, and a rigid material which increases rigidity, the bottom plate being coupled with the cushion portion.

2. The air mattress of claim 1, wherein the bottom plate is formed using the resin composition in which the plasticizer is mixed in an amount of 20 ∼ 70 Phr.

3. The air mattress of claim 2, wherein the rigid material comprises talc, silica, calcium carbonate, mica, quartz, glass fiber, antimony oxide (Sb₂O₃) and barium titanate.

4. The air mattress of claim 3, wherein the bottom plate has a thickness of about 1.2 ∼ 2 mm.

5. A method of manufacturing the air mattress of any one of claims 1 to 4, comprising:
manufacturing the bottom plate using the second resin composition;
injecting the first resin composition into a lower mold having air sac molding grooves formed at a predetermined interval, which are recessed to a predetermined depth, so as to mold the cushion portion;
covering an opening of the lower mold with the bottom plate;
placing an upper mold on the bottom plate and fixing the upper mold to the lower mold; and
rotating the upper mold and the lower mold using a rotational molding machine, so that the first resin composition is applied along an inner surface of the air sac molding grooves and is simultaneously integrated with the bottom plate.

6. The method of claim 5, wherein in the injecting the first resin composition, communication members which have a tubular shape to enable respective air sacs to communicate with each other are first provided in the cutting grooves which connect the air sac molding grooves of the lower mold.

7. A device for manufacturing an air mattress, comprising a lower mold comprising a plurality of air sac molding grooves recessed to a predetermined depth to form air sacs of a cushion portion of the air mattress and cutting grooves which connect respective air sac molding grooves to form a communication path which connects the cushion portion of the air mattress, and an upper mold which covers an opening of the lower mold, wherein a portion for forming the cutting grooves has a thickness reduction portion which reduces a thickness of a mold for the portion for forming the cutting grooves to make said thickness smaller than a thickness of a mold for a portion for forming the air sac molding grooves, so that a rate of heat conduction of the portion for forming the cutting grooves is equal to or greater than a rate of heat conduction of the portion for forming the air sac molding grooves.

8. The device of claim 7, wherein the thickness reduction portion is configured such that the thickness of the mold for the portion for forming the cutting grooves is less than the thickness of the mold for the portion for forming the air sac molding grooves.

9. The device of claim 7, wherein the thickness reduction portion is configured such that a plurality of heat transfer grooves recessed to a predetermined depth is formed on an outer surface of the portion for forming the cutting grooves.

10. The device of claim 7, wherein the lower mold is configured such that a round portion is formed at a position where the portion for forming the air sac molding grooves and the portion for forming the cutting grooves are adjacent to each other.

11. A method of manufacturing an air mattress using the device of any one of claims 7 to 10, comprising:
injecting a resin composition into a lower mold;
covering an opening of the lower mold with a bottom plate;
placing an upper mold on the bottom plate to couple the upper mold with the lower mold; and
rotating the upper mold and the lower mold using a rotational molding machine, so that the resin composition is applied on an inner surface of the air sac molding grooves and an inner surface of the portion for forming the cutting grooves and is simultaneously integrated with the bottom plate.
